(19) Europäisches Patentamt / European Patent Office / Office européen des brevets

(11) **EP 1 485 632 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(21) Anmeldenummer: **03714666.9**

(22) Anmeldetag: **28.02.2003**

(51) Int Cl.:
*F16D 48/08* *(2006.01)*

(86) Internationale Anmeldenummer:
**PCT/DE2003/000656**

(87) Internationale Veröffentlichungsnummer:
**WO 2003/074896 (12.09.2003 Gazette 2003/37)**

(54) **STEUEREINRICHTUNG UND VERFAHREN ZUM POSITIONSABGLEICH IN EINER BEWEGUNGSÜBERTRAGUNG**

CONTROL SYSTEM AND METHOD FOR THE POSITION ADJUSTMENT OF A TRANSMISSION OF MOTION

DISPOSITIF DE COMMANDE ET PROCEDE D'AJUSTEMENT DE POSITION DANS UNE TRANSMISSION DE MOUVEMENT

(84) Benannte Vertragsstaaten:
**AT BE BG CH CY CZ DE DK EE ES FI FR GB GR HU IE IT LI LU MC NL PT SE SI SK TR**

(30) Priorität: **07.03.2002 DE 10209917**

(43) Veröffentlichungstag der Anmeldung:
**15.12.2004 Patentblatt 2004/51**

(73) Patentinhaber: **LuK Lamellen und Kupplungsbau Beteiligungs KG**
**77813 Bühl (DE)**

(72) Erfinder: **BAEHR, Markus**
**77855 Achern (DE)**

(56) Entgegenhaltungen:
**WO-A-98/54483          WO-A-02/101258**
**FR-A- 2 813 360**

EP 1 485 632 B1

**Beschreibung**

Die vorliegende Erfindung bezieht sich auf eine Steuereinrichtung, insbesondere ein Steuergerät, und ein Verfahren zum Positionsabgleich in einer Bewegungsübertragung von einem Aktor zu einer federbelasteten Kupplung eines Getriebes eines Fahrzeuges.

Aus der Fahrzeugtechnik ist eine Steuereinrichtung, insbesondere ein Steuergerät, und ein Verfahren zum Durchführen eines Positionsabgleiches bekannt. Es ist möglich, dass eine Initialisierung der Position der Steuereinrichtung, insbesondere eines Kupplungsaktors, z. B. mittels einer Inkrementalwegmessung durchgeführt wird. Beispielsweise kann dabei ein Anschlag oder eine Rastierung an einem Kupplungsaktor bzw. am Ausrücksystem als Referenzpunkt verwendet werden, um insbesondere mechanische Veränderungen an der jeweiligen Kupplung ausgleichen zu können.

Die FR 2 813 360 A1 offenbart ein Verfahren zur Aktualisierung einer Bezugsposition einer federbelasteten Kupplung, indem eine markante Position des Kupplungsweges angefahren wird und mit einem gespeicherten Wert verglichen wird. In Abhängigkeit von Zustandsfunktionen der Kupplung wird entschieden, inwieweit der aktuell ermittelte Wert übernommen wird.

Die nicht vorveröffentlichte WO 02/101258 A offenbart ein ähnliches Verfahren.

Der Erfindung liegt die Aufgabe zugrunde, eine Steuereinrichtung und ein Verfahren zum Positionsabgleich in der Bewegungsübertragung von einem Aktor zu einer federbelasteten Kupplung eines Getriebes eines Fahrzeuges vorzuschlagen, durch die eine weiter verbesserte Ansteuerung einer Kupplung eines Getriebes ermöglicht wird.

Diese Aufgabe kann verfahrensmäßig durch ein Verfahren zum Positionsabgleich in einer Bewegungsübertragung von einem Aktor zu einer federbelasteten Doppelkupplung eines Getriebes eines Fahrzeuges gelöst werden, bei dem als Referenzpunkt zumindest eine charakteristische Position aus der Bewegungsübertragung verwendet wird.

Erfindungsgemäß kann vorgesehen sein, dass anstatt eines Anschlages oder einer Rastierung am Aktor bzw. am Ausrücksystem als Referenzpunkt zumindest ein charakteristischer Punkt der Kraftkennlinie der Kupplungsfeder verwendet wird, wobei zum Beispiel eine Tellerfeder oder dergleichen als Kupplungsfeder vorgesehen ist.

Als Referenzpunkt kann bei dem erfindungsgemäßen Verfahren zum Beispiel ein Knick oder dergleichen in der Kraftkennlinie bzw. Lastkennlinie verwendet werden. Dieser Knick kann bei einer einzelnen Kupplung z. B. für ein automatisiertes Schaltgetriebe (ASG) oder dergleichen dann auftreten, wenn die Tellerfeder derart entlastet ist, dass das Ausrücksystem der Wegübertragung von der Tellerfeder abhebt. Bei einer Doppelkupplung, insbesondere für ein unterbrechungsfreies Schaltgetriebe (USG), ein Parallelschaltgetriebe (PSG) oder dergleichen, kann vorzugsweise ein ähnlicher Knick in dem Verlauf der Kraftkennlinie beispielsweise bei einer Mittellage beim Übergang zwischen den beiden Kennlinien der Einzelkupplungen vorgesehen sein. Es ist auch möglich, dass andere Referenzpunkt verwendet werden. Beispielsweise gemäß einer nächsten Weiterbildung können auch Kraft-Null-Durchgänge als Referenzpunkte verwendet werden.

In vorteilhafter Weise kann vorgesehen sein, dass das Suchen und das Ermitteln eines derartigen Referenzpunktes gleichzeitig ein sogenanntes Software-Schnüffeln darstellt. Dabei können mechanische Verschiebungen, wie sie durch Abnutzung oder auch durch thermische Effekte auftreten können, in der Ansteuerung des Aktors in vorteilhafter Weise ausgeglichen werden. Auf der anderen Seite kann durch das Messen der mechanischen Veränderungen, zum Beispiel beim "Schnüffeln", möglicherweise auch ein Rückschluss auf den thermischen Zustand oder den Abnutzungsgrad der Kupplung gezogen werden. Wesentlich dabei ist es, dass das erfindungsgemäße Verfahren eine reproduzierbare Position auf der Kennlinie erkennt.

Zur Durchführung des sogenannten Software-Schnüffelns ist zu beachten, dass sich für den Elektromotor des Aktors eine Änderung der Ausrückkraft als eine Änderung des Reibmomentes im nahezu selbsthemmenden Ausrückgetriebe darstellt. Dieses Reibmoment kann auch vom Vorzeichen der äußeren Kraft abhängen. Eine Bewegung entgegen der Kraft der Kupplungsfeder ergibt eine deutlich größere Reibung als eine Bewegung in Richtung der Kraft der Kupplungsfeder. Dabei kann sich für vorbestimmte Bereiche ein nahezu linearer Zusammenhang zwischen der Kraft und dem Reibmoment ergeben.

Die Durchführung dieses sogenannten Schnüffelns und des damit verbundenen Positionsabgleichs gemäß des vorgeschlagenen Verfahrens kann auf unterschiedliche Arten realisiert werden. Beispielsweise kann im Rahmen einer vorteilhaften Ausgestaltung der Erfindung eine Geschwindigkeitsmessung bei konstanter Motorspannung vorgesehen werden. Bei der Bewegung des Aktors mit konstanter Spannung resultiert die Geschwindigkeit aus dem Reibmoment, welches sich bei selbsthemmenden Aktorgetrieben ergibt. Eine Änderung der Kupplungsfederkraft kann eine Änderung des Reibmomentes und somit eine Geschwindigkeitsveränderung des Aktors verursachen. Die Messung kann dabei vorzugsweise in eine Richtung entgegen der Kupplungsfederkraft und/oder mit zunehmender Federkonstante $\Delta F / \Delta x$ erfolgen. Die Änderung der Geschwindigkeit über dem Ort $\Delta v / \Delta x$ kann dabei bei Vernachlässigung der Trägheit $\dot{n}J > MR$ unabhängig von der Größe der Geschwindigkeit sein. Bei jeweils nahezu linearen Kraftkennlinien vor und nach dem Knick ergibt sich jeweils ein nur von der Federkonstante $F / \Delta x$ und den Motoreigenschaften abhängiger Wert für $\Delta v/\Delta x$. Da bei einer Inkrementalwegmessung die Geschwindigkeit das genaueste Signal des Aktors ist, kann diese Aktor-Geschwindigkeitsänderung in vorteilhafter Weise einfach gemessen und erkannt werden, um somit den Positionsabgleich durchführen zu können.

Gemäß einer Weiterbildung kann als Basis für die Ermittlung der Änderung der Aktor-Geschwindigkeit über der Aktor-Position $\Delta v / \Delta x$ füp $\Delta x$ vorzugsweise genau eine Motorumdrehung gewählt werden, wobei dann beispielsweise der Referenzpunkt durch den Schnittpunkt von Geschwindigkeitsrampen ermittelt wird. Als Mess-Basis können auch andere Werte verwendet werden.

Die Geschwindigkeitsmessung kann vorzugsweise jeweils bei derselben Winkelstellung bzw. Phasenlage des Aktors erfolgen, wobei mit $x_i$ die Aktor-Position bei eine betimmte Motorumdrehung bezeichnet ist (i als Index für die Motorumdrehung). Aus den so ermittelten Aktor-Geschwindigkeiten $v$ kann dann erkannt werden, ab welcher Motorumdrehung sich das System im Bereich der harten Feder befindet. Dabei ergibt sich folgender Grenzwert:

$$\text{abs}\,(v_i - v_{i-1}) > \text{Grenzwert}$$

Wenn erkannt wird, ab welcher Motorumdrehung sich das System im Bereich der harten Feder befindet, bedeutet dies, dass die Messungen von $v_i$ und $v_{i-1}$ das zeitlich erste Intervall von $x_i$ bis $x_{i-1}$ auf der Federlast begrenzen. Die Messungen von $v_{i-2}$ und $v_{i-3}$ können das zeitlich letzte intervall $x_{i-2}$ bis $x_{i-3}$ vor der Federlast begrenzen. Zwischen diesen Intervallen kann sich das Positionsintervall $x_{i-1}$ bis $x_{i-2}$ befinden, in dem der Referenzpunkt vorgesehen ist.

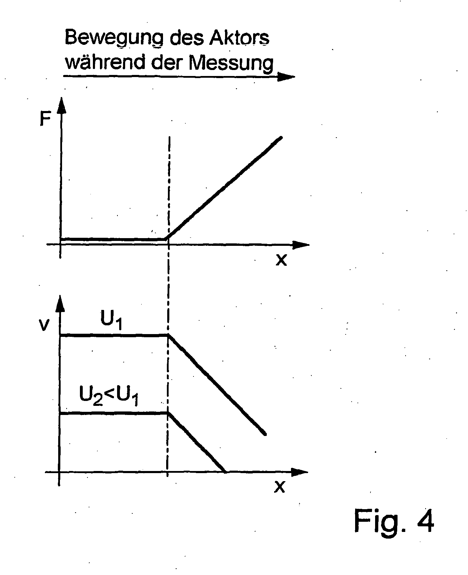

Aus diesen Intervallen und der an deren Grenzen gemessenen Geschwindigkeiten kann in vorteilhafter Weise die Position ermittelt werden, an der sich die Aktor-Geschwindigkeit $v$ ändert. Dies entspricht dem Referenzpunkt. Diese Ermittlung des Referenzpunktes ist graphisch in Figur 4 angedeutet, wobei die ermittelte Position, also der Referenzpunkt, als Schnittpunkt zwischen den beiden dargestellten Geraden angedeutet ist.

Ein eventuell vorliegendes Rauschen kann durch Auswerten eines Messvorganges bei unterschiedlichen Phasenlagen bezüglich der Motorumdrehung und durch anschließende Mittelwertbildung minimiert werden. Eine weitere mögliche Verbesserung bei der Referenzpunktermittlung kann sich daraus ergeben, dass nicht plausible Ergebnisse, wenn zum Beispiel die Referenzposition außerhalb des Intervalls $x_i$ bis $x_{i-3}$ liegt, unterdrückt werden.

Auch bekannte Probleme, wie eine starke Streuung der Geschwindigkeiten bei bestimmten Phasenlagen, können gemäß einer Weiterbildung der vorliegenden Erfindung bei der Referenzpunktermittlung bzw. bei der Mittelwertbildung berücksichtigt werden.

Es ist möglich, dass das sogenannte "Software-Schnüffeln" in denselben Fahrzuständen durchgeführt wird, in denen auch das hydraulische Schnüffeln ausgeführt wird. Insbesondere bei einem Stillstand des Motors und während der Fahrt, wenn nicht geschaltet wird, ist dies möglich. Dadurch wird ein regelmäßiger Abgleich der Position realisiert. Insbesondere bei einem unterbrechungsfreien Schaltgetriebe (USG) entspricht diese Vorgehensweise einem Schnüffeln bei der Anfahrkupplung, sodass hier zu den gleichen Fahrzuständen geschnüffelt werden kann, falls nicht gerade mit dem Lastschaltgang gefahren wird.

Dieses vorgestellte Verfahren kann insbesondere bei elektrischen Zentralausrückern oder für die Bedienung einer einzelnen Kupplung oder einer Doppelkupplungen verwendet werden. Insgesamt kann festgestellt werden, dass dieses Verfahren bei jedem Aktor mit mechanischem Ausrücksystem als sogenanntes "Software-Schnüffeln" eingesetzt wird, wobei der verwendete Typ des Wegsensors im Aktorsystem unbeachtlich ist.

Darüber hinaus ist es denkbar, dass diese vorgeschlagene Initialisierung der Position des Aktors auch bei mechanischen Endanschlägen eingesetzt werden kann. Beispielsweise kann der Positionsabgleich auch durch eine geeignete Tastpunktadaption ersetzt oder zusätzlich durchgeführt werden.

Besonders vorteilhaft ist das sogenannte "Software-Schnüffeln" hinsichtlich der Referenzpunktsuche, da insbesondere bei langen Autobahnfahrten über längere Zeit keine Tastpunktadaption als Ersatzstrategie verwendet werden kann.

Auf Grund der unterschiedlichen Konstruktionen der verwendeten Kupplungen ergeben sich auch unterschiedliche Lastverläufe bzw. Kraftverläufe bei Aktoren. Somit kann in vorteilhafter Weise vorgesehen sein, dass beispielsweise die Lastvorsteuerung automatisch an die Verhältnisse der jeweiligen eingesetzten Kupplung durch den Positionsabgleich bei dem erfindungsgemäßen Verfahren angepasst wird. Ein wesentlicher Unterschied zwischen den unterschiedlichen Kupplungen besteht darin, dass der Abstand zwischen den Einsatzpunkten der Aus- bzw. Einrückkraft für die Anfahrkupplung und die Lastschaltkupplung unterschiedlich sind. Die Kraft- bzw.

Lastvorsteuerung wird in der Steuereinrichtung bzw. in dem Lageregler für den Kupplungsaktor implementiert. Diese Lastvorsteuerung entspricht einem positionsabhängigen Anteil für die Ausgabe der Regelung. Der Verlauf der Lastvorsteuerung wird an den Lastverlauf der Kupplung angepasst, um eine gute Regelung zu erhalten. Da die Ausrückkraft der Anfahrkupplung für die Positionsreferenz verwendet wird, kann in vorteilhafter Weise auf eine zusätzliche Adaption verzichtet werden. Es sind auch andere Anpassungsmöglichkeiten bei der Lastvorsteuerung möglich.

Mit dem erfindungsgemäßen Verfahren werden zusätzliche Informationen über den Lastverlauf erhalten, um beispielsweise den Anstieg der Einrückkraft der Lastschaltkupplung zu erkennen. Die auf diese Weise bestimmte Position kann dann in die Lastvorsteuerung integriert werden. Bei dem vorbeschriebenen Verfahren wird ein Positionsabgleich für ein Kupplungsaktor, insbesondere mit einer Inkrementalwegmessung, durch eine "Schnüffelfunktion" ermöglicht, wobei hier bevorzugt bürstenlose Motoren in den Kupplungsaktoren vorgesehen sind. Es ist auch möglich, andere Motoren bei den Kupplungsaktoren zu verwenden.

Um Störungrn bzw. Schwankungen bei der Geschwindigkeitsermittlung für mehrere Phasenlagen zu minimieren, kann vorzugsweise gleich zu Beginn der Messung darauf geachtet werden, dass vorbestimmte Phasenlagen bei der Messung nicht betrachtet werden. Dies geschieht über die Auswertung der Beschleunigung ($\Delta v / \Delta t$). Beispielsweise können Phasenlagen, die in der ersten Motorumdrehung an eine zu hohe Beschleunigung grenzen, nicht weiter betrachtet werden.

Ferner kann die der Erfindung zugrunde liegende Aufgabe vorrichtungsmäßig durch eine Steuereinrichtung, insbesondere ein Steuergerät, zum Durchführen eines Positionsabgleichs in der Bewegungsübertragung von einem Aktor zu einer federbelasteten Kupplung eines Getriebes eines Fahrzeuges, insbesondere zum Durchführen des Verfahrens, gelöst werden, bei dem zumindest eine Messeinrichtung zum Erkennen einer charakteristischen Position aus der Bewegungsübertragung als Referenzpunkt vorgesehen ist.

Erfindungsgemäß kann durch die Messeinrichtung als Referenzpunkt zumindest eine charakteristische Position der Kraftkennlinie der Kupplungsfeder bestimmt werden, wobei als Messgröße der Messeinrichtung vorzugsweise die Aktorgeschwindigkeit vorgesehen ist. Mit der erfindungsgemäßen Steuereinrichtung kann durch den Positionsabgleich eine Lastvorsteuerung des Aktors adaptiert werden.

Weitere Vorteile und vorteilhafte Ausgestaltungen ergeben sich aus den Unteransprüchen und den nachfolgend beschriebenen Zeichnungen.
Es zeigen:

Figur 1 ein Flussdiagramm eines möglichen Ausführungsbeispiels des erfindungsgemäßen Verfahrens;

Figur 2 ein Flussdiagramm eines Zwischenschrittes des erfindungsgemäßen Verfahrens;

Figur 3 ein Flussdiagramm eines weiteren Zwischenschrittes des erfindungsgemäßen Verfahrens;

Figur 4 einen Lastverlauf und einen sich daraus ergebenen Verlauf der Aktor-Geschwindigkeit;

Figur 5 eine graphische Ermittlung eines Referenzpunktes;

Figur 6 einen möglichen tabellarisch dargestellten Algorithmus;

Figur 7 Werte der Lastvorsteuerung und Werte der angepassten Lastvorsteuerung;

Figur 8 unterschiedliche Geschwindigkeitsprofile bei unterschiedlichen Phasenlagen;

Figur 9 eine grobe Positionsreferenz aus den Geschwindigkeitsänderungen;

Figur 10 den Verlauf der Einrück- bzw. Ausrückkraft für die Lastschaltkupplung und die Anfahrkupplung über der Aktorposition.

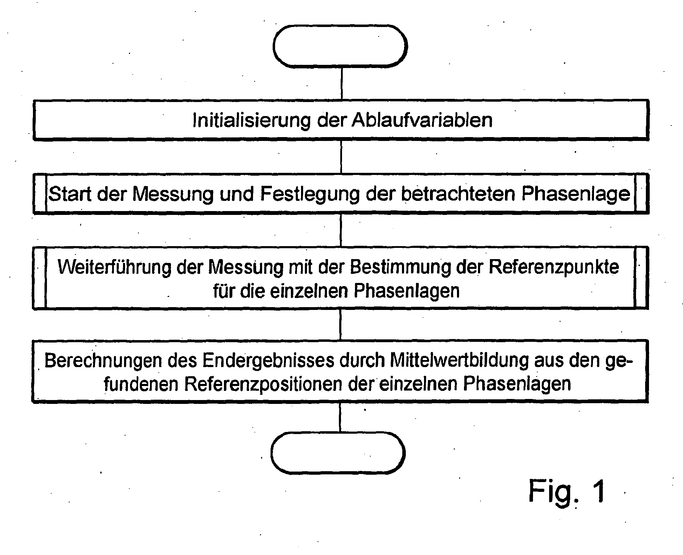

In Figur 1 ist ein Flussdiagramm eines möglichen Ausführungsbeispiels des erfindungsgemäßen Verfahrens dargestellt. Dabei erfolgt zunächst die Initialisierung der Ablaufvariablen. Danach wird die Messung und das Festlegen der betrachteten Phasenlagen gestartet. Daraufhin wird die Messung mit der Bestimmung der Referenzpunkte für die einzelnen Phasenlagen weitergeführt. Schließlich werden die Endergebnisse durch eine Mittelwertbildung aus den gefundenen Referenzpositionen der einzelnen Phasenlagen ermittelt.

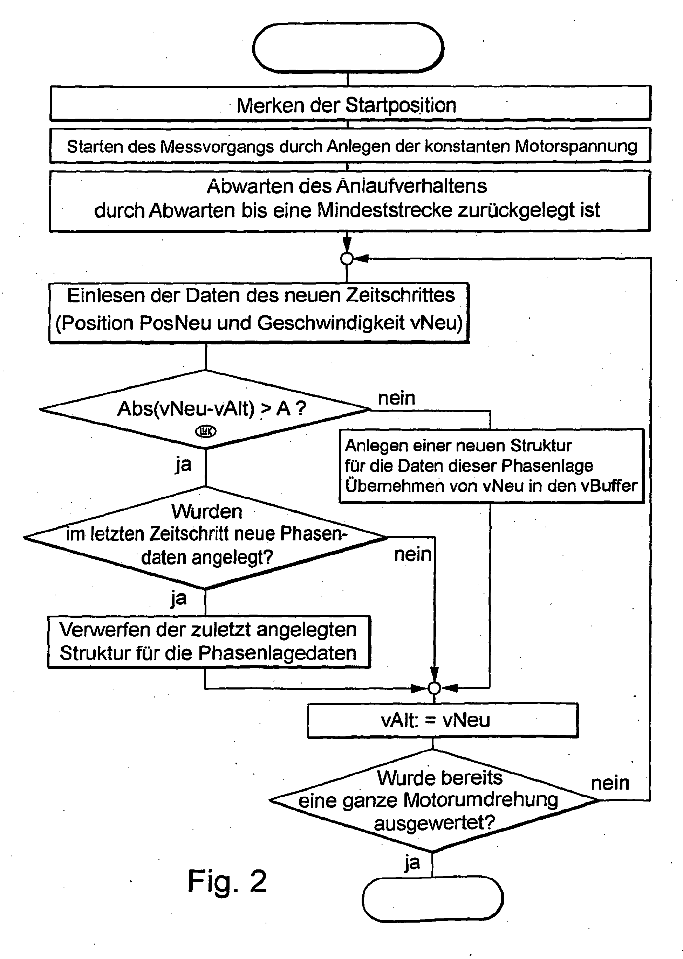

In Figur 2 ist ein Flussdiagramm eines Zwischenschrittes des erfindungsgemäßen Verfahrens gezeigt, wobei der Zwischenschritt den Start der Messung und die Festlegung der betrachteten Phasenlagen umfasst.

Vor dem Starten der Messung der Aktorgeschwindigkeit wird durch das Anlegen einer konstanten Motorspannung zunächst die Startposition registriert und danach das Anlaufverhalten abgewartet, bis eine Mindeststrecke zurückgelegt ist. Dann werden die Messdaten, wie z. B. eine neue Position $x_{neu}$ und eine neue Aktor-Geschwindigkeit $v_{neu}$, eines neuen Zeitintervalls eingelesen und es wird geprüft, ob die Differenz der neuen Aktor-Geschwindigkeit $v_{neu}$ und der alten Aktor-Geschwindigkeitwerte $v_{alt}$ absolut größer ist als ein vorbestimmter Grenzwert A.

Wenn die Differenz der neuen Aktor-Geschwindigkeitswerte $v_{neu}$ und der alten Aktor-Geschwindigkeitswerte $v_{alt}$ absolut nicht größer ist als ein vorbestimmter Grenzwert A, wird eine neue Struktur für die Messdaten dieser Phasenlage angelegt, wobei die neuen Geschwindigkeitswerte $v_{nett}$ in einem Puffer $v_{Buffer}$ gespeichert werden. Danach werden die neuen Geschwindigkeitswerte $v_{neu}$ den alten Geschwindigkeitswerte $v_{alt}$ gleichgesetzt, und wenn bereits eine komplette Motorumdrehung ausgewertet worden ist, wird der Verfahrensschritt Start der Messung und Festlegen der betrachteten Phasenlagen beendet.

Wenn die Differenz der neuen Geschwindigkeitswerte $v_{neu}$ und der alten Geschwindigkeitswerte $v_{alt}$ absolut größer ist als der vorbestimmte Grenzwert A, wird geprüft, ob neue Messdaten im letzten Zeitintervall angelegt wurden, wenn nein werden die neuen Qeschwindigkeitswerte $v_{neu}$ mit den alten Geschwindigkeitswerte $v_{alt}$ gleichgesetzt und wenn bereits eine komplette Motorumdrehung ausgewertet worden ist, wird der Verfahrensschritt Start der Messung und Festlegen der betrachteten Phasenlagen beendet. Wenn ja wird ein Zwischenschritt durchgeführt, bei dem die zuletzt angelegte Struktur für die Phaselagedaten verworfen wird.

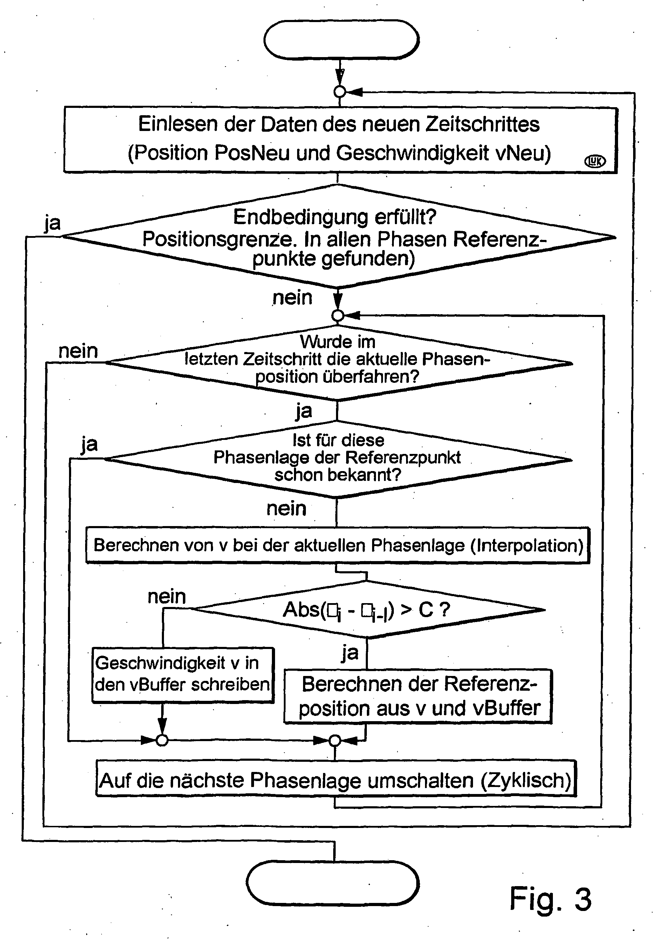

In Figur 3 ist ein Flussdiagramm eines weiteren Zwischenschrittes des erfindungsgemäßen Verfahrens dargestellt, bei dem der Referenzpunkt für die einzelnen Phasenlagen ermittelt wird.

Bei dem Ermitteln des Referenzpunktes für jede einzelne Phasenlage werden zunächst die Messdaten des neuen Zeitschrittes eingelesen und es wird geprüft, ob die Endbedingungen, wie Positionsgrenze und in sämtlichen Phasen Referenzpunkt gefunden, erfüllt sind. Wenn dies der Fall ist, wird der Verfahrensschritt beendet. Wenn nicht wird geprüft, ob im letzten Zeitintervall die aktuelle Phasenposition überfahren worden ist.

Wenn im letzten Zeitintervall die aktuelle Phasenposition überfahren worden ist, wird geprüft, ob für diese Phasenlage der Referenzpunkt bekannt ist. Wenn nicht kann die Geschwindigkeit des Aktors bei der aktuellen Phasenlage berechnet werden. Danach wird geprüft, ob die Differenz der neuen Geschwindigkeitswerte $v_{neu}$ und der alten Geschwindigkeitswerte $v_{alt}$ absolut nicht größer ist als ein vorbestimmter Grenzwert C. Wenn dies der Fall ist, wird die Referenzposition aus der Aktor-Geschwindigkeit $v_{neu}$ und dem Puffer $v_{Buffer}$ berechnet und wenn nicht wird die Aktorgeschwindigkeit in dem Puffer ($v_{Buffer}$) gespeichert und danach wird auf die nächste Phasenlage vorzugsweise zyklisch umgeschaltet und geprüft, ob im letzten Zeitintervall die aktuelle Phasenposition überfahren worden ist. Wenn im letzten Zeitintervall die aktuelle Phasenposition nicht überfahren worden ist, werden wieder die Messdaten eines neuen Zeitintervalls eingelesen.

In Figur 4 ist ein möglicher Lastverlauf bzw. Kraftverlauf und ein sich daraus ergebender theoretischer Verlauf der Aktor-Geschwindigkeit dargestellt, wobei durch einen Pfeil oberhalb der beiden Diagramme die Bewegungsrichtung des Aktors während der Messung angegeben ist. Störungen, welche periodisch während der Motorumdrehung auftreten können, werden bei dem vorgestellten Verfahren auf einfachste Weise unterdrückt. Es ist nur erforderlich, dass als Basis für die Ermittlung der Änderung der Aktor-Geschwindigkeit $\Delta v / \Delta x$ als $\Delta x$ genau eine Motorumdrehung gewählt wird. Beispielsweise kann der Referenzpunkt dann durch den Schnittpunkt von Geschwindigkeitsrampen ermittelt werden. Es ist auch möglich, andere Referenzpunkt zu verwenden.

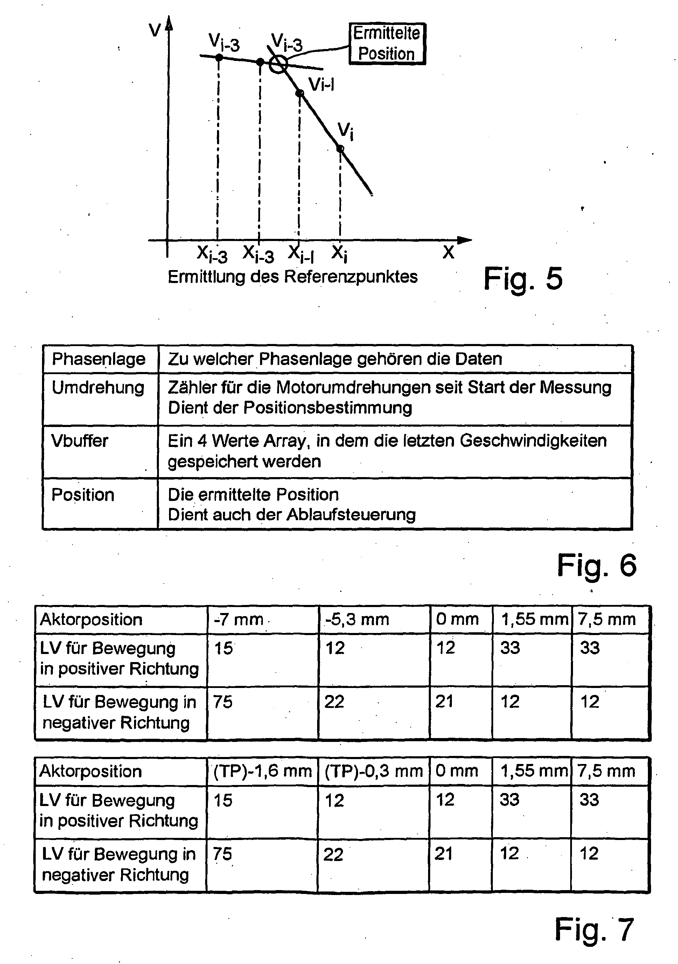

Aus den in Figur 5 gezeigten Intervallen und der an deren Grenzen gemessenen Aktor-Geschwindigkeiten kann in vorteilhafter Weise die Position ermittelt werden, an der sich die Aktor-Geschwindigkeit ändert. Dies entspricht dem Referenzpunkt. Diese Ermittlung des Referenzpunktes ist graphisch in Figur 5 angedeutet, wobei die ermittelte Position, also der Referenzpunkt, als Schnittpunkt zwischen den beiden dargestellten Geraden angedeutet ist.

In Figur 6 ist ein möglicher Algorithmus tabellarisch dargestellt. Demnach kann vorgesehen sein, dass für jede Phasenlage, bei der die Referenzposition gesucht wird, ein Satz Daten verwendet wird. Zunächst wird unter dem Stichwort "Phasenlage" geprüft, zu welcher Phasenlage die Daten gehören. Unter dem Stichwort "Umdrehung" kann ein Zähler für die Motorumdrehungen seit Start der Messung verwendet werden, welcher der Positionsbestimmung dient. Danach kann unter dem Stichwort "Vbuffer" ein 4-Werte-Array verwendet werden, in dem die letzten Geschwindigkeiten gespeichert werden. Schließlich kann unter dem Stichwort "Position" die ermittelte Position ausgegeben werden, welches der Ablaufsteuerung dient.

In Figur 7 sind zwei Tabellen dargestellt. In der oberen Tabelle sind die festen Werten für die Lastvorsteuerung LV für die Bewegung in positiver und negativer Richtung jeweils für bestimmte Aktorpositionen angegeben. In der unteren Tabelle sind für die Lastvorsteuerung die an die gemessenen Referenzpositionen der Einrückkraft der Lastschaltkupplung angepassten Aktorpositionen angegeben. Mit dieser Ausgestaltung wird eine möglichst einfache Anpassung der Lastvorsteuerung an das Kupplungssystem vorgesehen, da hier eine einfache Parallelverschiebung der Kennlinien der Lastschaltkupplung vorliegt. Daher genügt es hier eine Position zu messen. Es ist auch möglich andere Anpassungen der Lastvorsteuerung vorzusehen, um das hier vorgeschlagene Verfahren weiter zu verbessern.

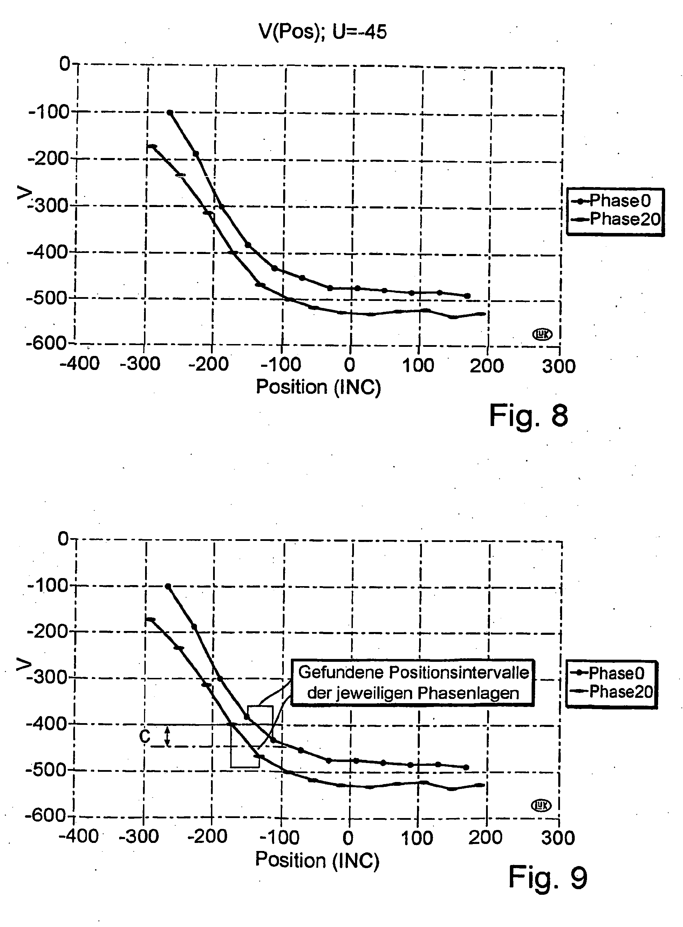

In Figur 8 sind unterschiedliche Geschwindigkeitsprofile bei unterschiedlichen Phasenlagen dargestellt. Aus den Verläufen ist ersichtlich, dass, wenn die Geschwindigkeit während einer Messung immer an der selben Phasenlage der Motorumdrehung betrachtet wird, sich von der Modulation durch die Motordrehung bereinigte Signalverläufe ergibt.

Ein nächster Schritt für die Auswertung der Geschwindigkeitswerte kann darin bestehen, zu erkennen, ab welcher Motorumdrehung sich der Bereich der harten Feder befindet. Dies ist mit einer einfachen Grenzwertüberschreitung ($|v_i - v_{i-1}| > C$) möglich. Der Grenzwert C ist dabei von den Eigenschaften des Motors und der Härte der Feder abhängig. Dies ist in Figur 9 durch den Verlauf der Aktor-Geschwindigkeit über der Aktorposition bei konstanter Spannung mit U = -45 gezeigt, wobei sich eine grobe Positionsreferenz aus den Geschwindigkeitsänderungen ergibt. Damit kann die Knickposition der Lastkennlinie auf $\pm 40$ Inkremente genau ermittelt werden. Eine bessere Positionsangabe kann erhalten werden, wenn man die letzten Geschwindigkeitsmessungen als Stützstellen für Geraden verwendet und deren Schnittpunkt berechnet, wie dies in Figur 5 gezeigt ist. Dort begrenzen die Messungen von $v_i$ und $v_{i-1}$ das erste Intervall auf der harten Feder (das oben gefundene Positionsintervall). Die Messungen von $v_{i-2}$ und $v_{i-3}$ begrenzen das letzte Intervall vor der harten Feder. Eine Ermittlung der genauen Referenzposition ist dann in Figur 5 gezeigt.

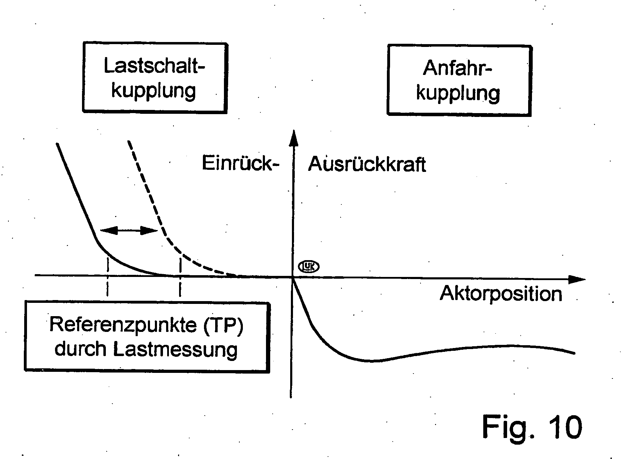

In Figur 10 ist die Einrück- bzw. Ausrückkraft für die Lastschaltkupplung und die Anfahrkupplung über die Aktorposition dargestellt. Aus dieser Figur wird deutlich, dass ein Unterschied im Abstand zwischen den Einsatzpunkten der Aus- bzw. Einrückkraft für die Anfahrkupplung und die Lastschaltkupplung gegeben ist.

Die Verschiebung des Arbeitsbereiches der Lastschaltkupplung erfordert jedoch eine Anpassung insbesondere deshalb, weil die Last erheblich von der Aktorposition abhängt. Mit dem erfindungsgemäßen Verfahren wird diese Anpassung erreicht. Somit kann verhindert werden, dass die Vorsteuerung entweder zu kleine Werte oder zu große Werte vorschlägt. Bei einer zu geringen Vorsteuerung führt dies zu einem trägen Regelverhalten, da auf den Aufbau des Integralanteils gewartet werden muss, um die Last zu überwinden. Bei einer zu großen Vorsteuerung führt dies zu einer Übersteuerung der Regelung, welche den Aktor erheblich belasten kann.

Zusammenfassend wird ein Verfahren angegeben, mit dem insbesondere aus der Aktor-Geschwindigkeit erkannt werden kann, an welcher Position das Ausrücksystem auf die Feder, insbesondere Tellerfeder, aufsetzt. Hierbei sind außer dem Inkrementalwegsensor keine zusätzlichen Sensoren oder mechanischen Teile erforderlich. Vorzugsweise sollte dieses Verfahren jedoch nur bei Aktoren ohne Kompensationsfeder und mit mechanischem Ausrücksystem verwendet werden, wie z.B. bei einem unterbrechungsfreien Schaltgetriebe (USG) mit EZA.

**Patentansprüche**

1. Verfahren zum Positionsabgleich in einer Bewegungsübertragung von einem Aktor zu einer federbelasteten Doppelkupplung eines Getriebes eines Fahrzeuges, wobei als Referenzpunkt zumindest eine charakteristische Position aus der Bewegungsübertragung verwendet wird, **dadurch gekennzeichnet, dass** als charakteristische Position eine Mittellage beim Übergang zwischen den beiden Kraftkennlinien der Einzelkupplungen verwendet wird.

2. Verfahren nach Anspruch 1, **dadurch gekennzeichnet, dass** als charakteristische Position zumindest ein Kraft-Null-Durchgang bei der Kraftkennlinie verwendet wird.

3. Verfahren nach einem der vorangehenden Ansprüche, **dadurch gekennzeichnet, dass** zum Erkennen des Referenzpunktes die Aktor-Geschwindigkeit ($v$) bei konstanter Motorspannung (U) gemessen wird.

4. Verfahren nach Anspruch 3, **dadurch gekennzeichnet, dass** die Messung der Geschwindigkeit in eine Bewegungsrichtung entgegen der Kupplungsfederkraft durchgeführt wird.

5. Verfahren nach Anspruch 3 oder 4, **dadurch gekennzeichnet, dass** das Messintervall auf eine Motorumdrehung des Aktors festgelegt wird.

6. Verfahren nach einem der Ansprüche 3 bis 5, **dadurch gekennzeichnet, dass** die Messung der Geschwindigkeit zunächst nur jeweils bei der selben Winkelstellung oder Phasenlage des Aktors durchgeführt wird.

7. Verfahren nach einem der Ansprüche 3 bis 6, **dadurch gekennzeichnet, dass** die Messungen der Aktor-Geschwindigkeit ($v$) durch ein erstes Messintervall ($v_i$, $v_{i-1}$) und durch ein letztes Intervall ($v_{i-2}$, $v_{i-3}$) begrenzt werden.

8. Verfahren nach Anspruch 7, **dadurch gekennzeichnet, dass** durch die in den Intervallen ($v_i$, $v_{i-1}$; $v_{i-2}$, $v_{i-3}$) gemessenen Aktor-Geschwindigkeiten ($v$) der Referenzpunkt ermittelt wird, bei dem sich die Aktor-Geschwindigkeit ($v$) ändert.

9. Verfahren nach einem der Ansprüche 3 bis 9, **dadurch gekennzeichnet, dass** ein Rauschen durch das Auswerten eines Messvorganges bei unterschiedlichen Phasenlagen bezüglich einer Motorumdrehung und durch anschließende Mittelwertbildung minimiert wird.

10. Verfahren nach einem der Ansprüche 3 bis 9, **dadurch gekennzeichnet,** das vorbestimmte Phasenlagen bei der Referenzpunktermittlung nicht berücksichtigt werden.

11. Verfahren nach einem der Ansprüche 3 bis 10, **dadurch gekennzeichnet, dass** für jede Phasenlage, bei der die Referenzposition gesucht wird, zumindest ein Satz Messdaten verwendet werden.

12. Verfahren nach einem der vorangehenden Ansprüche, **dadurch gekennzeichnet, dass** zunächst die Ablaufvariablen initialisiert werden, dass danach die Messung der Aktor-Geschwindigkeit ($v$) und das Festlegen der betrachteten Phasenlagen gestartet wird, dass daraufhin die Messung der Aktor-Geschwindigkeit ($v$) weitergeführt wird und die Referenzpunkte für die einzelnen Phasenlagen bestimmt werden und dass anschließend die Endergebnisse durch Mittelwertbildung aus den gefundenen Referenzpositionen der einzelnen Phasenlagen ermittelt werden.

13. Verfahren nach Anspruch 12, **dadurch gekenn-**

**zeichnet, dass** vor dem Starten der Messung der Aktor-Geschwindigkeit ($v$) durch das Anlegen einer konstanten Motorspannung (U) zunächst die Startposition (x) registriert wird, dass danach das Anlaufverhalten abgewartet wird, bis eine Mindeststrecke zurückgelegt ist, dass dann die Messdaten eines neuen Zeitintervalls eingelesen werden, dass geprüft wird, ob die Differenz der neuen Geschwindigkeitswerte ($v_{neu}$) und der alten Geschwindigkeitswerte ($v_{alt}$) absolut größer ist als ein vorbestimmter Grenzwert (A).

14. Verfahren nach Anspruch 13, **dadurch gekennzeichnet, dass**, wenn die Differenz der neuen Geschwindigkeitswerte ($v_{neu}$) und der alten Geschwindigkeitswerte ($v_{alt}$) absolut nicht größer ist als ein vorbestimmter Grenzwert (A), eine neue Struktur für die Messdaten dieser Phasenlage angelegt wird, wobei neue Geschwindigkeitswerte ($v_{neu}$) in einen Puffer ($v_{Buffer}$) gespeichert werden, dass danach die neuen Geschwindigkeitswerte ($v_{neu}$) mit den alten Geschwindigkeitswerte ($v_{alt}$) gleichgesetzt werden und dass, wenn bereits eine komplette Motorumdrehung ausgewertet worden ist, der Verfahrensschritt Start der Messung und Festlegen der betrachteten Phasenlagen beendet wird.

15. Verfahren nach Anspruch 13, **dadurch gekennzeichnet, dass**, wenn die Differenz der neuen Geschwindigkeitswerte ($v_{neu}$) und der alten Geschwindigkeitswerte ($v_{alt}$) absolut größer ist als ein vorbestimmter Grenzwert (A), geprüft wird, ob neue Messdaten im letzten Zeitintervall angelegt wurden, wenn nein werden die neuen Geschwindigkeitswerte ($v_{neu}$) mit den alten Geschwindigkeitswerte ($v_{alt}$) gleichgesetzt und wenn bereits eine komplette Motorumdrehung ausgewertet worden ist, wird der Verfahrensschritt Start der Messung und Festlegen der betrachteten Phasenlagen beendet, und wenn ja wird ein Zwischenschritt durchgeführt, bei dem die zuletzt angelegte Struktur für die Phasenlagedaten verworfen wird.

16. Verfahren nach einem der Ansprüche 12 bis 15, **dadurch gekennzeichnet, dass** bei dem Ermitteln des Referenzpunktes für jede einzelne Phasenlage zunächst die Messdaten des neuen Zeitschrittes eingelesen werden, dass geprüft wird, ob die Endbedingungen erfüllt sind, wenn ja wird der Verfahrensschritt beendet, wenn nein wird geprüft, ob im letzten Zeitintervall ($v_{i-2}$, $v_{i-3}$) die aktuelle Phasenposition überfahren worden ist.

17. Verfahren nach Anspruch 16, **dadurch gekennzeichnet, dass**, wenn im letzten Zeitintervall ($v_{i-2}$, $v_{i-3}$) die aktuelle Phasenposition überfahren worden ist, geprüft wird, ob für diese Phasenlage der Referenzpunkt bekannt ist, wenn nein kann die Geschwindigkeit des Aktors bei der aktuellen Phasenlage berechnet werden, dass danach geprüft wird, ob die Differenz der neuen Geschwindigkeitswerte ($v_{neu}$) und der alten Geschwindigkeitswerte ($v_{alt}$) absolut nicht größer ist als ein vorbestimmter Grenzwert (C), wenn ja wird die Referenzposition aus der Aktorgeschwindigkeit ($v_{neu}$) und dem Puffer ($v_{Buffer}$) berechnet und wenn nein wird die Aktorgeschwindigkeit in dem Puffer ($v_{Buffer}$) gespeichert, und dass danach auf die nächste Phasenlage umgeschaltet wird und geprüft wird, ob im letzten Zeitintervall ($v_{i-2}$, $v_{i-3}$) die aktuelle Phasenposition überfahren worden ist.

18. Verfahren nach Anspruch 16, **dadurch gekennzeichnet, dass**, wenn im letzten Zeitintervall ($v_{i-2}$, $v_{i-3}$) die aktuelle Phasenposition nicht überfahren worden ist, wieder die Messdaten eines neuen Zeitintervalls ($v_i$, $v_{i-1}$) eingelesen werden.

19. Verfahren nach einem der vorangehenden Ansprüche, **dadurch gekennzeichnet, dass** die Lastvorsteuerung des Aktors durch den Positionsabgleich angepasst wird.

20. Doppelkupplungsgetriebe mit einer Steuereinrichtung, insbesondere Steuergerät, welche das Verfahren nach Anspruch 1 gegebenenfalls in Kombination mit einem der Ansprüche 2 bis 19 durch führt.

21. Doppelkupplungsgetriebe mit einer Steuereinrichtung nach Anspruch 20, **dadurch gekennzeichnet, dass** durch eine Messeinrichtung als Referenzpunkt zumindest eine charakteristische Position der Kraftkennlinie der Kupplungsfeder bestimmbar ist.

22. Doppelkupplungsgetriebe mit einer Steuereinrichtung nach Anspruch 20 oder 21, **dadurch gekennzeichnet, dass** als Messgröße der Messeinrichtung die Aktorgeschwindigkeit vorgesehen ist.

23. Doppelkupplungsgetriebe mit einer Steuereinrichtung nach einem der Ansprüche 20 bis 22, **dadurch gekennzeichnet, dass** durch den Positionsabgleich eine Lastvorsteuerung des Aktors adaptierbar ist.

**Claims**

1. Method for adjusting a position in a transmission of movement from an actuator to a spring-loaded double clutch of a gearbox of a vehicle, wherein at least one characteristic position from the transmission of movement is used as a reference point, **characterized in that** a central position is used as a characteristic position at the transition between the two force **characteristic** curves of the individual clutches.

**2.** Method according to Claim 1, **characterized in that** at least a force zero crossing is used as a characteristic position for the force characteristic curve.

**3.** Method according to one of the preceding claims, **characterized in that** the actuator speed (v) is measured at a constant motor voltage (U) in order to detect the reference point.

**4.** Method according to Claim 3, **characterized in that** the measurement of the speed is carried out in a direction of movement counter to the clutch spring force.

**5.** Method according to Claim 3 or 4, **characterized in that** the measuring interval is defined as one revolution of the motor of the actuator.

**6.** Method according to one of Claims 3 to 5, **characterized in that** the measurement of the speed is initially only carried out in each case at the same angular position or phase angle of the actuator.

**7.** Method according to one of Claims 3 to 6, **characterized in that** the measurements of the actuator speed (v) are limited by a first measuring interval ($v_i$, $v_{i-1}$) and by a last interval ($v_{i-2}$, $v_{i-3}$).

**8.** Method according to Claim 7, **characterized in that** the reference point at which the actuator speed (v) changes is determined by means of the actuator speeds (v) measured in the intervals ($v_i$, $v_{i-1}$; $v_{i-2}$, $v_{i-3}$).

**9.** Method according to one of Claims 3 to 9, **characterized in that** noise is minimized by evaluating a measuring process at different phase angles with respect to a revolution of the motor and by subsequent formation of average values.

**10.** Method according to one of Claims 3 to 9, **characterized in that** predetermined phase angles are not taken into account in the determination of a reference point.

**11.** Method according to one of Claims 3 to 10, **characterized in that** at least one set of measurement data is used for each phase angle at which the reference position is sought.

**12.** Method according to one of the preceding claims, **characterized in that** at first the sequence variables are initialized, **in that** the measurement of the actuator speed (v) and the definition of the phase angles under consideration is started after this, **in that** the measurement of the actuator speed (v) is then carried out and the reference points for the individual phase angles are determined, and **in that** the final results are subsequently determined by formation of average values from the reference positions found for the individual phase angles.

**13.** Method according to Claim 12, **characterized in that,** before the measurement of the actuator speed (v) is started by applying a constant motor voltage (v), the starting position (x) is firstly registered, **in that** the system then waits for the starting behaviour until a minimum distance has been covered, **in that** the measurement data of a new time interval is then read in, **in that** it is checked whether the difference between the new speed values ($v_{new}$) and the old speed values ($v_{old}$) is greater in absolute terms than a predetermined limiting value (A).

**14.** Method according to Claim 13, **characterized in that** if the difference between the new speed values ($v_{new}$) and the old speed values ($v_{old}$) is not greater in absolute terms than a predetermined limiting value (A), a new structure for the measurement data of this phase angle is created, wherein new speed values ($v_{new}$) are stored in a buffer ($v_{buffer}$), **in that** the new speed values ($v_{new}$) are equated with the old speed values ($v_{old}$) after this, and **in that**, if a complete revolution of the motor has already been evaluated, the method step of starting the measurement and defining the phase angles under consideration is ended.

**15.** Method according to Claim 13, **characterized in that,** if the difference between the new speed values ($v_{new}$) and the old speed values ($v_{old}$) is greater in absolute terms than a predetermined limiting value (A), it is checked whether new measurement data have been created in the last time interval, and if the response is no, the new speed values ($v_{new}$) are equated with the old speed values ($v_{old}$), and if a complete revolution of the motor has already been evaluated, the method step of starting the measurement and defining the phase angles under consideration is ended, and if the response is yes an intermediate step is carried out during which the structure which was last created for the phase angle data is rejected.

**16.** Method according to one of Claims 12 to 15, **characterized in that** during the determination of the reference point for each individual phase angle, the measurement data of the new time step are read in first, **in that** it is checked whether the final conditions are met, and if the response is yes the method step is ended, if the response is no it is checked whether the current phase position has been passed through in the last time interval ($v_{i-2}$, $v_{i-3}$).

**17.** Method according to Claim 16, **characterized in that** if the current phase position has been passed through in the last time interval ($v_{i-2}$, $v_{i-3}$), it is checked whether the reference point for this phase angle is known, and if the response is no the speed of the actuator is calculated at the current phase angle, **in that** it is checked after this whether the difference between the new speed values ($v_{new}$) and the old speed values ($v_{old}$) is not greater in absolute terms than a predetermined limiting value (C), and if the response is yes the reference position is calculated from the actuator speed ($v_{new}$) and the buffer ($v_{buffer}$) and if the response is no the actuator speed is stored in the buffer ($v_{buffer}$), and **in that** after this the system is switched to the next phase angle, and it is checked whether the current phase position has been passed through in the last time interval ($v_{i-2}$, $v_{i-3}$).

**18.** Method according to Claim 16, **characterized in that** if the current phase position has not been passed through in the last time interval ($v_{i-2}$, $v_{i-3}$), the measurement data of a new time interval ($v_i$, $v_{i-1}$) are read in again.

**19.** Method according to one of the preceding claims, **characterized in that** the load pilot control of the actuator is adapted by means of the adjustment of a position.

**20.** Double clutch gear mechanism having a control device, in particular a control unit, which carries out the method according to Claim 1, if appropriate in combination with one of Claims 2 to 19.

**21.** Double clutch gear mechanism having a control device according to Claim 20, **characterized in that** at least one **characteristic** position of the force characteristic curve of the clutch spring can be determined as a reference point by a measuring device.

**22.** Double clutch gear mechanism having a control device according to Claim 20 or 21, **characterized in that** the actuator speed is provided as a measurement variable of the measuring device.

**23.** Double clutch gear mechanism having a control device according to one of Claims 20 to 22, **characterized in that** a load pilot control of the actuator can be adapted by means of the adjustment of a position.

## Revendications

**1.** Procédé de compensation de la position dans une transmission du déplacement d'un actionneur à un double embrayage, sollicité élastiquement, de la transmission d'un véhicule, dans lequel on utilise comme point de référence au moins une position caractéristique de la transmission de déplacement, **caractérisé en ce que,** lors du passage entre les deux lignes caractéristiques de force des différents embrayages, on utilise comme position caractéristique une position centrale.

**2.** Procédé selon la revendication 1, **caractérisé en ce que,** comme position caractéristique, on utilise au moins un passage de la force par zéro sur la ligne caractéristique de force.

**3.** Procédé selon l'une quelconque des revendications précédentes, **caractérisé en ce que,** pour détecter le point de référence, on mesure la vitesse (v) de l'actionneur à une tension constante (U) du moteur.

**4.** Procédé selon la revendication 3, **caractérisé en ce que** la mesure de la vitesse est réalisée dans une direction de déplacement opposée à la force de ressort de l'embrayage.

**5.** Procédé selon les revendications 3 ou 4, **caractérisé en ce que** l'intervalle de mesure est défini sur un tour du moteur de l'actionneur.

**6.** Procédé selon l'une des revendications 3 à 5, **caractérisé en ce que** la mesure de la vitesse est réalisée d'abord uniquement à la même position angulaire ou au même déphasage de l'actionneur.

**7.** Procédé selon l'une des revendications 3 à 6, **caractérisé en ce que** les mesures de la vitesse (v) de l'actionneur sont limitées dans un premier intervalle de mesure ($v_i$, $v_{i-1}$) et dans un dernier intervalle ($v_{i-2}$, $v_{i-3}$).

**8.** Procédé selon la revendication 7, **caractérisé en ce que** le point de référence auquel la vitesse (v) de l'actionneur se modifie est déterminé par les vitesses (v) de l'actionneur mesurées dans les intervalles ($v_i$, $v_{i-1}$ ; $v_{i-2}$, $v_{i-3}$).

**9.** Procédé selon l'une des revendications 3 à 9, **caractérisé en ce que** le bruit est minimisé par l'évaluation d'une opération de mesure à différents déphasages d'un tour du moteur et ensuite par formation d'une valeur moyenne.

**10.** Procédé selon l'une quelconque des revendications 3 à 9, **caractérisé en ce que** l'on ne tient pas compte des déphasages prédéterminés dans la détermination du point de référence.

**11.** Procédé selon l'une des revendications 3 à 10, **caractérisé en ce que** pour chaque déphasage pour lequel on cherche la position de référence, on utilise au moins un jeu de données de mesure.

**12.** Procédé selon l'une des revendications précédentes, **caractérisé en ce que** l'on initialise d'abord les variables de déroulement, **en ce qu'**on lance ensuite la mesure de la vitesse (v) de l'actionneur et la détermination des déphasages considérés, **en ce que** l'on poursuit ensuite la mesure de la vitesse (v) de l'actionneur, **en ce que** l'on détermine les points de référence pour les différents déphasages et ce que l'on détermine ensuite les résultats finaux en formant la valeur moyenne des positions de référence déterminées pour les différents déphasages.

**13.** Procédé selon la revendication 12, **caractérisé en ce qu'**avant le lancement de la mesure de la vitesse (v) de l'actionneur, on enregistre d'abord la position initiale (x) en appliquant une tension constante (U) du moteur, **en ce que** l'on attend ensuite le comportement de démarrage jusqu'à avoir parcouru un parcours minimum, **en ce qu'**on lit ensuite les données de mesure sur un nouvel intervalle de temps, **en ce que** l'on vérifie si la différence entre les nouvelles valeurs de vitesse ($v_{nouv}$) et les anciennes valeurs de vitesse ($v_{anc}$) est en valeur absolue supérieure à une valeur limite prédéterminée (A).

**14.** Procédé selon la revendication 13, **caractérisé en ce que** lorsque la différence entre les nouvelles valeurs de vitesse ($v_{nouv}$) et les anciennes valeurs de vitesse ($v_{anc}$) n'est en valeur absolue pas supérieure à une valeur limite prédéterminée (A), on définit une nouvelle structure des données de mesure de ce déphasage et on conserve dans un tampon ($v_{tamp}$) les nouvelles valeurs de vitesse ($v_{nouv}$), **en ce qu'**ensuite on égalise les nouvelles valeurs de vitesse ($v_{nouv}$) aux anciennes valeurs de vitesse ($v_{anc}$) et **en ce qu'**enfin, lorsqu'un tour complet du moteur a été évalué, on termine l'étape de lancement de la mesure et de détermination des déphasages considérés.

**15.** Procédé selon la revendication 13, **caractérisé en ce que** lorsque la différence entre les nouvelles valeurs de vitesse ($v_{nouv}$) et les anciennes valeurs de vitesse ($v_{anc}$) est en valeur absolue supérieure à une valeur limite prédéterminée (A), on vérifie si les nouvelles données de mesure ont été définies au cours du dernier intervalle de temps, et si ce n'est pas le cas, les nouvelles valeurs de vitesse ($v_{nouv}$) sont égalisées aux anciennes valeurs de vitesse ($v_{anc}$) et lorsqu'un tour complet du moteur a été évalué, l'étape de lancement de la mesure et de détermination des déphasages considérés est terminée, et si c'est le cas, on réalise une étape intermédiaire au cours de laquelle la structure definie en dernier lieu pour les données de déphasage est écartée.

**16.** Procédé selon l'une des revendications 12 à 15, **caractérisé en ce que** lors de la détermination du point de référence pour chacun des différents déphasages, on lit d'abord les données de mesure du nouvel intervalle de temps et on vérifie si les conditions finales sont satisfaites, et si c'est le cas, l'étape est terminée, alors que si ce n'est pas le cas, on vérifie si la position effective de la phase a été dépassée au cours du dernier intervalle de temps ($v_{i-2}$, $v_{i-3}$).

**17.** Procédé selon la revendication 16, **caractérisé en ce que** si au cours du dernier intervalle de temps ($v_{i-2}$, $v_{i-3}$), la position effective de la phase a été dépassée, on vérifie si on connaît le point de référence pour ce déphasage, et si ce n'est pas le cas, la vitesse de l'actionneur peut être calculée pour le déphasage effectif, **en ce qu'**on vérifie ensuite si la différence entre les nouvelles valeurs de vitesse ($v_{nouv}$) et les anciennes valeurs de vitesse ($v_{anc}$) n'est en valeur absolue pas supérieure à une valeur limite prédéterminée (C), si c'est le cas, la position de référence est calculée à partir de la vitesse ($v_{nouv}$) de l'actionneur et du tampon ($v_{tamp}$) et si ce n'est pas le cas, la vitesse de l'actionneur est conservée en mémoire dans le tampon ($v_{tamp}$), et **en ce qu'**ensuite on bascule sur le déphasage suivant et on vérifie si la position effective de la phase a été déplassée au cours du dernier intervalle de temps ($v_{i-2}$, $v_{i-3}$).

**18.** Procédé selon la revendication 16, **caractérisé en ce que** si la position effective de la phase n'a pas été dépassé au cours du dernier intervalle de temps ($v_{i-2}$, $v_{i-3}$), on lit de nouveau les données de mesure sur un nouvel intervalle de temps ($v_i$, $v_{i-1}$).

**19.** Procédé selon l'une des revendications précédentes, **caractérisé en ce que** la précommande de la charge de l'actionneur est adaptée par la compensation de position.

**20.** Transmission à double embrayage qui présente un dispositif de commande et en particulier un appareil de commande qui exécute le procédé selon la revendication 1, éventuellement en combinaison avec l'une des revendications 2 à 19.

**21.** Transmission à double embrayage qui présente un dispositif de commande selon la revendication 20, **caractérisée en ce qu'**un dispositif de mesure permet de déterminer comme point de référence au moins une position caractéristique de la ligne caractéristique de force du ressort d'embrayage.

**22.** Transmission à double embrayage qui présente un dispositif de commande selon les revendications 20 ou 21, **caractérisée en ce que** la vitesse de l'actionneur est prévue comme grandeur de mesure du dispositif de mesure.

**23.** Transmission à double embrayage qui présente un dispositif de commande selon l'une des revendications 20 à 22, **caractérisée en ce que** la précommande de la charge de l'actionneur peut être adaptée par la compensation de position.

Initialisierung der Ablaufvariablen

Start der Messung und Festlegung der betrachteten Phasenlage

Weiterführung der Messung mit der Bestimmung der Referenzpunkte für die einzelnen Phasenlagen

Berechnungen des Endergebnisses durch Mittelwertbildung aus den gefundenen Referenzpositionen der einzelnen Phasenlagen

Fig. 1

Merken der Startposition

Starten des Messvorgangs durch Anlegen der konstanten Motorspannung

Abwarten des Anlaufverhaltens
durch Abwarten bis eine Mindeststrecke zurückgelegt ist

Einlesen der Daten des neuen Zeitschrittes
(Position PosNeu und Geschwindigkeit vNeu)

Abs(vNeu-vAlt) > A ?  — nein

ja

Anlegen einer neuen Struktur
für die Daten dieser Phasenlage
Übernehmen von vNeu in den vBuffer

Wurden
im letzten Zeitschritt neue Phasendaten angelegt?  — nein

ja

Verwerfen der zuletzt angelegten
Struktur für die Phasenlagedaten

vAlt: = vNeu

Wurde bereits
eine ganze Motorumdrehung
ausgewertet?  — nein

ja

Fig. 2

Einlesen der Daten des neuen Zeitschrittes
(Position PosNeu und Geschwindigkeit vNeu) (LuK)

Endbedingung erfüllt?
Positionsgrenze. In allen Phasen Referenzpunkte gefunden)

ja

nein

Wurde im
letzten Zeitschritt die aktuelle Phasenposition überfahren?

nein

ja

Ist für diese
Phasenlage der Referenzpunkt
schon bekannt?

ja

nein

Berechnen von v bei der aktuellen Phasenlage (Interpolation)

$Abs(\square_i - \square_{i-1}) > C$ ?

nein

ja

Geschwindigkeit v in
den vBuffer schreiben

Berechnen der Referenzposition aus v und vBuffer

Auf die nächste Phasenlage umschalten (Zyklisch)

Fig. 3

Bewegung des Aktors
während der Messung

Fig. 4

Ermittlung des Referenzpunktes

Fig. 5

| Phasenlage | Zu welcher Phasenlage gehören die Daten |
|---|---|
| Umdrehung | Zähler für die Motorumdrehungen seit Start der Messung Dient der Positionsbestimmung |
| Vbuffer | Ein 4 Werte Array, in dem die letzten Geschwindigkeiten gespeichert werden |
| Position | Die ermittelte Position Dient auch der Ablaufsteuerung |

Fig. 6

| Aktorposition | -7 mm | -5,3 mm | 0 mm | 1,55 mm | 7,5 mm |
|---|---|---|---|---|---|
| LV für Bewegung in positiver Richtung | 15 | 12 | 12 | 33 | 33 |
| LV für Bewegung in negativer Richtung | 75 | 22 | 21 | 12 | 12 |

| Aktorposition | (TP)-1,6 mm | (TP)-0,3 mm | 0 mm | 1,55 mm | 7,5 mm |
|---|---|---|---|---|---|
| LV für Bewegung in positiver Richtung | 15 | 12 | 12 | 33 | 33 |
| LV für Bewegung in negativer Richtung | 75 | 22 | 21 | 12 | 12 |

Fig. 7

V(Pos); U=-45

**Fig. 8**

Gefundene Positionsintervalle der jeweiligen Phasenlagen

**Fig. 9**

Fig. 10

**EP 1 485 632 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2813360 A1
- WO 02101258 A